# EUROPÄISCHE PATENTSCHRIFT

(11) **EP 1 047 355 B1**
(45) Veröffentlichungstag und Bekanntmachung des Hinweises auf die Patenterteilung: **29.12.2004**
(21) Anmeldenummer: 99906061.9
(22) Anmeldetag: 14.01.1999
(51) Int. Cl.: A61C 13/00, A61C 5/10

(54) **VERFAHREN ZUR HERSTELLUNG VOLLKERAMISCHER INLAYS, KRONEN, BRÜCKEN, TEILBRÜCKEN, GERÜSTE FÜR IMPLANTATE ODER SUPERSTRUKTUREN IN DER ZAHNTECHNIK**
METHOD FOR PRODUCING COMPLETELY CERAMIC INLAYS, CROWNS, BRIDGES, PARTIAL BRIDGES, FRAMES FOR IMPLANTS OR SUPER STRUCTURES IN THE FIELD OF DENTISTRY
PROCEDE DE FABRICATION D'INLAYS, DE COURONNES, DE BRIDGES, DE BRIDGES PARTIELS, D'ARMATURES POUR IMPLANTS OU DE SUPERSTRUCTURES EN DENTISTERIE

(30) Priorität: 16.01.1998 DE 19801534; 16.01.1998 DE 19801532; 16.01.1998 DE 19801530; 23.03.1998 DE 19812664; 15.04.1998 DE 19816546; 09.09.1998 DE 19841075; 16.11.1998 DE 19852740
(43) Veröffentlichungstag der Anmeldung: 02.11.2000
(60) Teilanmeldung: 04021649.1
(73) Patentinhaber: Wolz, Stefan, 55566 Bad Sobernheim (DE)
(72) Erfinder: Wolz, Stefan, 55566 Bad Sobernheim (DE)
(74) Vertreter: Wagner, Jutta, Dr.
(86) Internationale Anmeldenummer: PCT/DE1999/000106
(87) Internationale Veröffentlichungsnummer: WO 1999/035994

(56) Entgegenhaltungen:
- EP-A- 0 241 384
- EP-A- 0 455 853
- EP-A- 0 701 808
- WO-A-94/21214
- WO-A-97/35531
- FR-A- 2 640 495

## Beschreibung

Aus der WO 97/35531, die als repräsentativ für den nächstliegenden Stand der Technik angesehen wird, ist ein Verfahren zur Herstellung eines Gerüstes für Inlays, Kronen und Brücken in der Zahntechnik bekannt. Bei diesem Verfahren werden die Gerüste, z.B. aus Alumina, hergestellt, indem auf den Stumpf eines Arbeitsmodells eine Folie aufgezogen wird, die aufgezogene Folie mit einem Schlicker aus dem entsprechenden Material, z.B. Alumina, versehen wird, dann die Folie vom Arbeitsmodell entnommen und mit dem darauf befindlichen Schlicker gebrannt wird. Beim Brennen der Keramikmasse verbrennt die Schrumpffolie und das Gerüst, z.B. in Form eines Käppchens, wird erhalten. Danach erfolgt üblicherweise die Infiltrierung des Käppchens mit einer Glasmasse. Auf dem so hergestellten Käppchen erfolgt anschließend der übliche Aufbau der Verblendkeramik.
Der nach diesem Verfahren hergestellte Zahnersatz ist absolut metallfrei und somit biokompatibel und erreicht die Festigkeitswerte von Metallverbundkeramiken. Wegen der Einfachheit der Herstellung und der geringen Materialkosten kann für breite Bevölkerungsteile daher ein hochwertiger Zahnersatz zur Verfügung gestellt werden.
Obschon mit diesem Verfahren eine gegenüber dem aus der EP-A-02241 384 bekannten Verfahren eine Arbeitsersparnis in der Größenordnung von 70-80% verbunden ist, ist es erfindungsgemäß gelungen, jeden einzelnen Arbeitsabschnitt nochmals zu verkürzen, womit auch eine qualitative Verbesserung erzielt wird, die im einzelnen nachfolgend näher erläutert wird.
Anhand der Zeichnungen werden die erfindungsgemäßen Schritte erklärt, wie sie in den Patentansprüchen beansprucht werden.

Es zeigen:
- Fig.1: eine Vorrichtung zur Auftragung eines Schlickers auf eine aufgezogene Folie;
- Fig. 2: eine CNC-Maschine, mit der neben dem Schlicker auch die Verblendkeramik aufgetragen werden kann;
- Fig. 3: eine Vorrichtung zum schnellen und faltenfreiem Aufziehen einer Folie auf einen Einzelstumpf;
- Fig. 4: eine Vorrichtung zum Auftragen von Schlicker oder anderen Keramikmassen im Querschnitt und Draufsicht;
- Fig. 5: eine Unterlage für Gerüste während des Infiltriervorgangs;
- Fig. 6: eine Vorrichtung zum Infiltrieren der vorgesinterten Gerüste mit Glas.

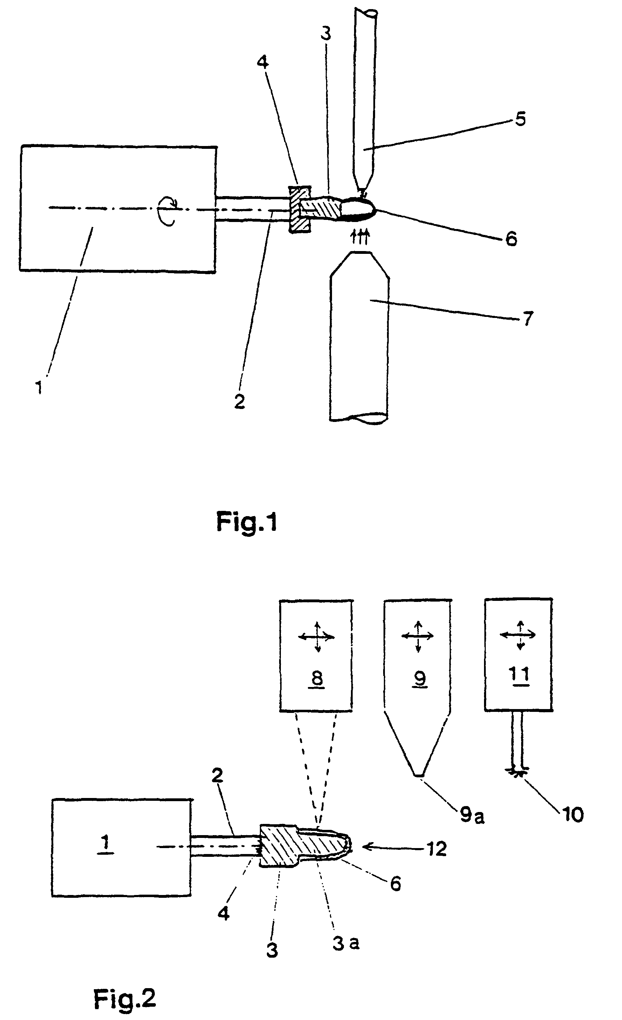

Bei den bekannten Verfahren erfolgte bisher der Auftrag des Schlickers mit einem Pinsel. Dies hatte zur Folge, daß durch Abtropfen des Schlickers von der Folie Materialverluste entstehen. Bevor der Schlicker gebrannt wird, muß er ferner auf der Folie leicht antrocknen. Bisher wurde dies durch eine entsprechende Verweilzeit an der Luft sichergestellt.
Es ist daher ein Aspekt der Erfindung, das bekannte Verfahren ohne Materialverlust zu beschleunigen, was im folgenden anhand der Figur 1 näher erläutert wird.

Der Motor 1 treibt eine Welle 2 an und ist bis auf eine Drehzahl von etwa einer Umdrehung pro Minute herab regulierbar. An der Spitze der Welle 2 ist der Stumpf 3, üblicherweise ein Gipsstumpf des Arbeitsmodells, mit einem Klebewachs 4 befestigt. Beim Hineinstecken des Stumpfes 3 in das Klebewachs 4 ist darauf zu achten, daß der Stumpf möglichst gut zentriert in Bezug auf die Drehachse der Welle angebracht ist, was das Auftragen des Schlickers erleichtert.

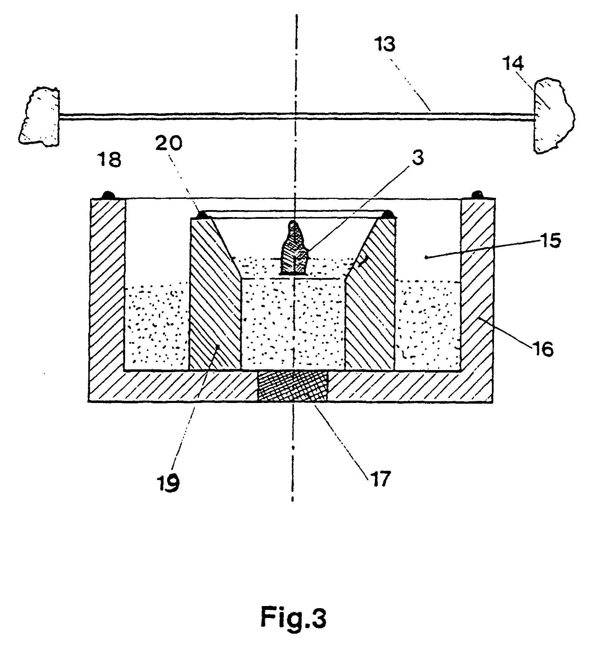

Auf die Präparation des Stumpfes 3 ist eine Folie 6 aufgeschrumpft. Damit ein faltenfreies Aufschrumpfen erzielt wird, ist es zweckmäßig, die Folie so aufzuschrumpfen, wie es später anhand der Figur 3 erläutert wird.

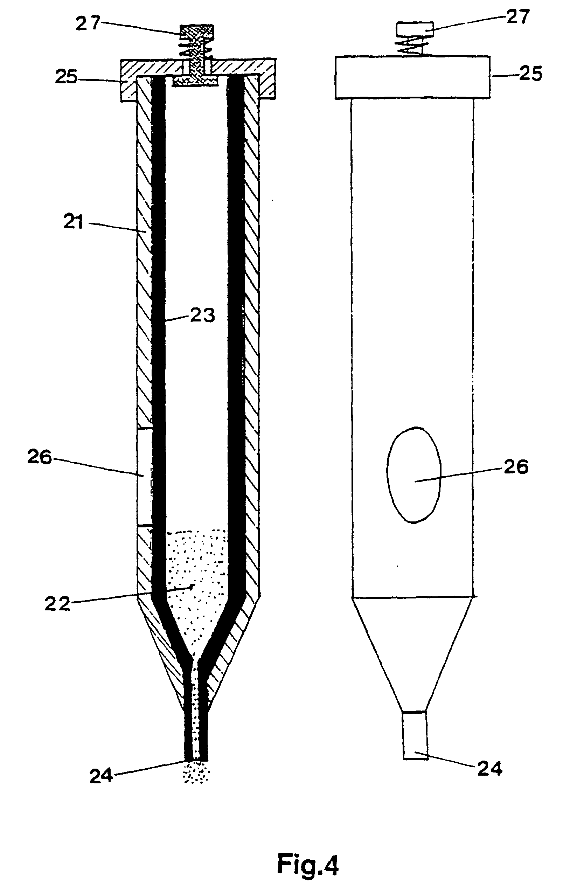

Mit Hilfe des Werkzeugs 5, beispielsweise eines Pinsels, wird der Schlicker auf die Folie 6 aufgetragen. Von besonderem Vorteil ist es, wenn eine Auftragsvorrichtung benutzt wird, die in Figur 4 gezeigt ist.
Während und/oder nach dem Auftragen des Schlickers wird der Schlicker mit einem Gas getrocknet, das über Umgebungstemperatur erwärmt ist. Hierzu wird zweckmäßigerweise ein Fön 7 benutzt, dessen Luftaustrittstemperatur regelbar ist. Während des Schlickerauftrags hat sich eine Lufttemperatur von 25°C bis maximal 40°C bewährt.
Das Anblasen des Schlickers mit erwärmter Luft beschleunigt den Trocknungsvorgang und ermöglicht eine gleichmäßige Trocknung der Schlickermasse, was sich positiv auf das Gefüge des gebrannten Keramikmaterials auswirkt.
Nachdem der Schlicker angetrocknet ist, muß die Folie 6 vom Stumpf 3 entfernt werden. Hierzu wird die Föntemperatur auf 80-120°C gesteigert, was zum Schmelzen einer Trennschicht führt, die sich zwischen der Folie 6 und der Präparation des Stumpfes 3 befindet. Ein leichtes Abziehen der Folie ist somit gewährleistet.

Die Folie 6 mit dem darauf befindlichen Schlicker wird anschließend gebrannt, wobei das Plastikmaterial der Folie rückstandsfrei verbrennt. Nach der sogenannten Infiltrierung des gebrannten Käppchens und der üblichen Bearbeitung kann der Aufbau der Verblendkeramik erfolgen.
Aus vorstehenden Ausführungen ist auch ersichtlich, daß sich dieses Verfahren ohne Schwierigkeit in das automatisierte Verfahren gemäß Figur 2 integrieren läßt, das nachfolgend beschrieben wird.

In Figur 2 zeigt 1 den Motor einer CNC-Fräsmaschine,der eine Welle 2 in Drehung versetzt. Am Ende der Welle ist ein Sägestumpf 3 eines Arbeitsmodelles befestigt,der eine Präparation 3a aufweist, die formmäßig mit dem Zahnstumpf eines Patienten oder einem Implantat übereinstimmt. Der Sägestumpf 3 wird zweckmäßigerweise mit einem Klebewachs 4 an der Welle 2 befestigt, wobei eine gewisse Formschlüssigkeit zwischen dem Ende der Welle 2 und dem Sägestumpf 3 hilfreich sein kann. Auf die Präparation ist eine Schrumpffolie 6 faltenfrei aufgeschrumpft. Anstelle der Folie ist auch der Auftrag eines lippenstiftartigen Trennmittels möglich. Die Erfindung wird aber einfachheitshalber im nachfolgenden nur gemäß Folienverfahren beschrieben.

Als erster Schritt im CNC-Verfahren wird zunächst die Oberflächenkontur der über dem Objekt aufgezogenen Folie abgetastet und numerisch gespeichert. Wie bei modernen CNC-Maschinen üblich geschieht dies mittels eines Lasers 8. Eine mechanische Abtastung ist jedoch auch möglich.
Anschließend erfolgt die Auftragung eines Schlickers mittels einer pipettenähnlichen Auftragsvorrichtung 9, die näher in Figur 4 beschrieben ist. Die Austrittsspitze 9a wird hierbei im geringen Abstand über die sich drehende Folie 6 geführt, wobei der Abstand der Austrittsspitze 9a zur Oberfläche der Folie durch die vorher eingespeicherten Werte des Oberflächenprofils numerisch gesteuert wird. Die Drehgeschwindigkeit der Welle 2 und die Austrittsgeschwindigkeit des Schlickers an der Spitze 9a sind hierbei so aufeinander abgestimmt, daß ein kontinuierlicher Materialfluß von der Spitze 9a zu Oberfläche der Folie gewährleistet ist. Durch diese Maßnahmen besitzt das Käppchen bereits in diesem Verfahrensstand annähernd die gewünschte Wandstärke.

Als nächster Verfahrensschritt erfolgt das Abfräsen des überschüssigen Materials durch den numerisch gesteuerten Fräskopf 10 mit Fräse 11. Das Ausfräsen einer Kontur in der Zahntechnik mittels einer CNC-Fräsmaschine ist zwar an sich nichts Neues, jedoch geschieht dies grundsätzlich beim Stand der Technik durch Ausfräsen aus dem Vollen. Bei der vorliegenden Erfindung ist jedoch durch den gesteuerten Schlickerauftrag das abzufräsende Volumen bereits auf ein Minimum reduziert, was um eine Größenordnung schnelleres Arbeiten ermöglicht.

Nach kurzem Antrocknen des Schlickers wird das auf der Präparation 3a befindlich Käppchen 12 von dieser abgezogen, gesintert und in der bekannten Weise infiltriert, damit die notwendige Festigkeit erzielt wird.

Die vorstehend beschriebene erfindungsgemäße Anordnung, bestehend aus einer an sich bekannten CNC-Fräsmaschine,erfindungsgemäß kombiniert mit einer pipettenähnlichen Dosiervorrichtung, läßt sich ferner für die Herstellung einer kompletten Keramikkrone verwenden. Hierzu wird das fertige Käppchen nach dem Infiltrieren wieder auf die Präparation 3a aufgesetzt. Der vorher durch die Schrumpffolie eingenommene Raum läßt sich durch Wachs oder ein ähnliches Material ersetzen, sodaß ein sicherer Halt gewährleistet ist.
Das Keramikmaterial wird -wie der Schlicker vorher auf die Folie- auf das Käppchen aufgetragen, wobei die Steuerung der Auftragspipette durch digital gespeicherte Werte erfolgt, die der gewünschten anatomischen Form der Krone entsprechen. Hierzu wird vorher auf die Präparation 3a ein Modell des Zahnes, beispielsweise aus Wachs, aufgesteckt, dessen Oberfläche in der bereits beschriebenen Weise gespeichert wird. Bei diesem Materialauftrag ist selbstverständlich der Schrumpf der Keramik beim Brennen einzukalkulieren.

Das Auftragen des Keramikmaterials kann aus mehreren Auftragspipetten erfolgen, die Material unterschiedlicher Farbtönungen enthalten. Durch entsprechende Schichtung und Steuerung läßt sich so der gewünschte Farbton der Krone einstellen. Diese Steuerung kann über die Einstellung des Auspressdruckes in der Pipette oder über den Kolbenvorschub erfolgen, sowie durch den Rechner in 3D-Graphik erstellt werden.

Wichtig bei dem erfindungsgemäßen Verfahren ist es ferner, daß die Folie schnell und faltenfrei aufgezogen werden kann.
Aus Figur 3 ist der Grundaufbau einer Tiefziehvorrichtungen erkennbar, die vorstehende Anforderungen erfüllt. Eine Folie 13 wird durch eine Einspannvorrichtung 14 gehalten. Da die Folie 13 nach dem Erhitzen aufgrund ihrer geringen Masse schnell die Wärme verliert, sind üblicherweise (nicht gezeigte) Wärmespeicherelemente vorgesehen. In einem Granulataufnahmeraum 15, der durch eine Wandung 16 gebildet wird, befindet sich des Granulat zum Halten des Objektes, hier des Einzelstumpfes 3. Im Boden des Aufnahmeraumes 15 ist ein Filter 17 vorgesehen, das verhindert, daß das Granulat durch das Vakuum unterhalb des Filters abgesaugt wird.
Die erhitze Folie wird auf die Dichtlippe 18 aufgelegt und tiefgezogen. Hierbei ummantelt sie den Einzelstumpf 3. Bis hier besteht zwischen der Erfindung und dem Stand der Technik kein Unterschied.
Für die gewünschte Präzision ist eine solche Vorrichtung aber noch nicht geeignet. Zum einen wird bei dem vorstehend erwähnten Verfahren eine sehr dünne Folie benötigt. Ihre Stärken betragen 0.1 mm oder dünner für die Beschichtung von Einzelstümpfen für die Schlickertechnik und höchstens 0.6 mm für die Teleskop-Kronentechnik. Solche Folien zerreißen unweigerlich in den herkömmlichen Tiefziehvorrichtungen.
Durch den Einsatz des erfindungsgemäßen Trichters 19, der mit einer Dichtlippe 20 am oberen Rand versehen sein kann, wird in überraschender Weise das Reißen der Folie verhindert und ein faltenfreier Überzug auf dem Einzelstumpf erzielt, da der Trichter beim Tiefziehen die Folie definiert auf den Stumpf leitet, wodurch eine gleichmäßige Materialstärke auf dem Stumpf erreicht wird.
Ein weiteres Problem bei dünnen Folien kann durch das Granulat entstehen, das üblicherweise aus Blei in zylindrischer Form mit einem Durchmesser von etwa 0.5 mm besteht.
Es wurde nun gefunden, daß sich Messingkügelchen mit einem Durchmesser von 0.2 bis 0.5 mm, vorzugsweise 0.3 mm, besonders eignen, da sie die Folie nicht perforieren.
Nach dem Aufschrumpfen der Folie ist es vorteilhaft, die Folie in einem begrenzten Bereich an der Spitze des Stumpfes zu entfernen. Hierdurch liegt das Käppchen im fertigen Zustand des Zahnes direkt auf dem Zahnstumpf auf, wodurch Spannungen im Zahnaufbau reduziert werden.

Der Raum, der bei diesem Verfahren von der Folie ausgefüllt wird, hat die Funktion eines Platzhalters, der bei Kronen und in der Brückentechnik erwünscht ist, da diese den Abfluß des Zementierungsmaterials gewährleistet.
Bei der Herstellung von Inlays, Teilkronen und Gerüste für Implantate und/oder Suprastrukturen ist eine solche Platzhalterfunktion nicht nötig, sondern sogar unerwünscht, da diese zahnprothetischen Teile unmittelbar mit ihrem Partnerteil kontaktieren sollen. Man spricht hier daher von einer adhäsiven Zementierung. Insbesondere aber in der Implantattechnik ist kein Spiel erwünscht, da dies Ursache für das Herausfallen der Implantate sein kann, da üblicherweise die Kronen mit dem Implantat verschraubt werden und das Auftreten eines Biegemomentes zum Bruch der Krone führt.
Bei der Entwicklung der Erfindung war es zunächst ein Ziel, die Folie durch ein äußerst dünnes Material zu ersetzen, das die unerwünschte Platzhaltereigenschaft nicht mehr aufweist. Der Erfinder hat nun in äußerst überraschender Weise gefunden, daß sich handelsübliche Lippenpflegemittel wie Labello ( eingetragenes Warenzeichen der Fa. Beiersdorf AG) bestens eignet. Hierzu muß das Material warm, also über 45°C, auf den Stumpf aufgetragen werden, da sich so ein hauchdünner Film bilden kann. Wegen der schlechten Sichtbarkeit des Films aufgrund seiner geringen Stärke und/oder zur Verbesserung der Reflexion des Laserstrahles empfiehlt sich das Anfärben des Mittels.
Nach dem Abkühlen ist der Stumpf dann mit einem Film überzogen, der beim Auftragen des Schlickers nicht zerstört wird und an dem der Schlicker gut haftet. Nach Entnahme vom Arbeitsmodell wird der Rohling gesintert. Hierbei verflüssigt sich das erfindungsgemäße Trennmittel wieder und wird zunächst von der Keramik wie von einem Schwamm aufgesogen und anschließend bei der hohen Sintertemperatur rückstandslos verbrannt. Hierdurch wird die gewünschte Präzision erzielt.
Die solchermaßen hergestellte Restauration ist daher für die adhäsive Zementierung und insbesonders für die Implantattechnik bestens geeignet.

Bei der Herstellung von künstlichen Zähnen oder dgl. wird nach wie vor die Keramikmasse in Form eines Schlickers mit dem Pinsel per Hand auf das Objekt aufgetragen. Diese Technik unterscheidet sich fast in nichts von der Technik eines Malers, der von einer Farbpalette mit dem Pinsel Ölfarbe auf ein Bild aufträgt, nur daß der Zahntechniker normalerweise eine Glasplatte benutzt.
Da Schlicker aus einer Mischung aus Keramikpulver und üblicherweise Wasser besteht, verdunstet das Wasser aus der Mischung heraus, wodurch der Schlicker unbrauchbar, da zu zäh, wird. Insbesondere bei Alumina-Schlickern ist das Wasserverhältnis eine sehr kritische Größe. Bei nicht-optimalem Wasserverhältnis ergibt sich beim Brennen ein schlechtes Gefüge und damit eine geringe Bruchfestigkeit. Da dies dem Zahntechniker bekannt ist, bringt er an den auf der Arbeitsglasplatte befindlichen Schlicker Feuchtigkeitsspeicher an, z.B. feuchte Papierkügelchen usw. Der Phantasie sind in diesem Punkt keine Grenzen gesetzt.

Andererseits besteht aber auch die Gefahr, daß durch das erforderliche Pinselauswaschen zuviel Wasser in den Schlicker eingetragen wird. Auch dies hat im Endeffekt die gleichen negativen Folgen.
Die in Figur 4 gezeigte Auftragsvorrichtung gewährleistet ein konstantes Flüssigkeit/Keramikpulver-Verhältnis beim Arbeiten.
Die Auftragsvorrichtung besteht aus einem Außenrohr 21, das bei Gebrauch wie ein Pinsel in der Hand des Zahntechnikers liegt. In das Außenrohr 21 ist ein elastisches Innenrohr 23, vorzugsweise aus Silikonkautschuk, eingelegt, das mit der Keramikmasse gefüllt ist. Außenrohr 21 und Innenrohr 23 verjüngen sich zu einer Auftragsspitze 24. Da der Innenraum der Auftragsvorrichtung durch eine Kappe 25 verschlossen ist, kann durch Ausübung eines Fingerdruckes über die Fingerdrucköffnung 26 ein Überdruck erzielt werden, der den Schlicker an der Auftragsspitze 24 austreten läßt. Um einen Unterdruck abbauen zu können, der beim Zurückgehen des eingedrückten Innenrohres 23 in die Normallage entsteht, kann ein Belüftungsventil 27 vorgesehen werden.

Zur Anpassung an die jeweiligen Arbeitsbedingungen kann die Auftragsspitze füllfederhaltig geschlitzt oder pinselartig ausgebildet sein. Die Form der Spitze hängt von der Viskosität des Schlickers ab.

Da das elastische Innenrohr 23 in das Außenrohr 21 eingeschoben werden kann, ist es möglich, erfindungsgemäß den Schlicker beim Hersteller des Keramikpulvers anmischen und in das Innenrohr 23 einfüllen zu lassen, da beim Mischen im Zahnlabor falsche Mischungsverhältnisse leicht möglich sind. Um einen gebrauchsfähigen Schlicker zu erhalten, muß das Innenrohr nur an beiden Enden dann aufgeschnitten oder anderweitig geöffnet werden.

Diese Konstruktion hat gegenüber anderen denkbaren Vorrichtungen den Vorteil, daß keinerlei mechanische Teile, wie Kolben, benötigt werden.

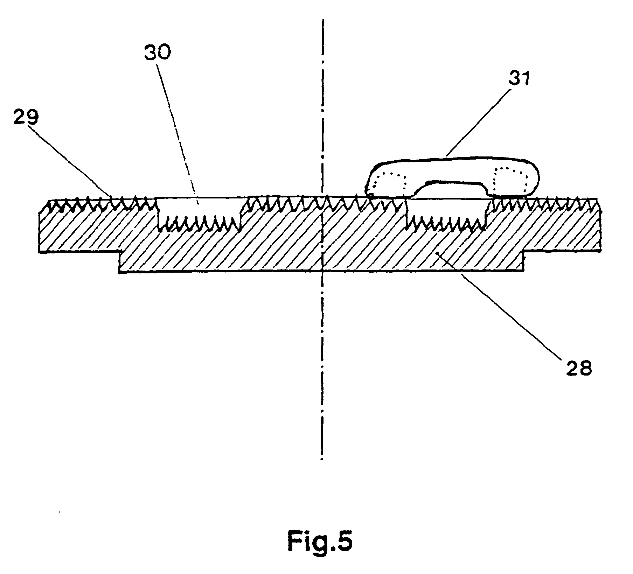

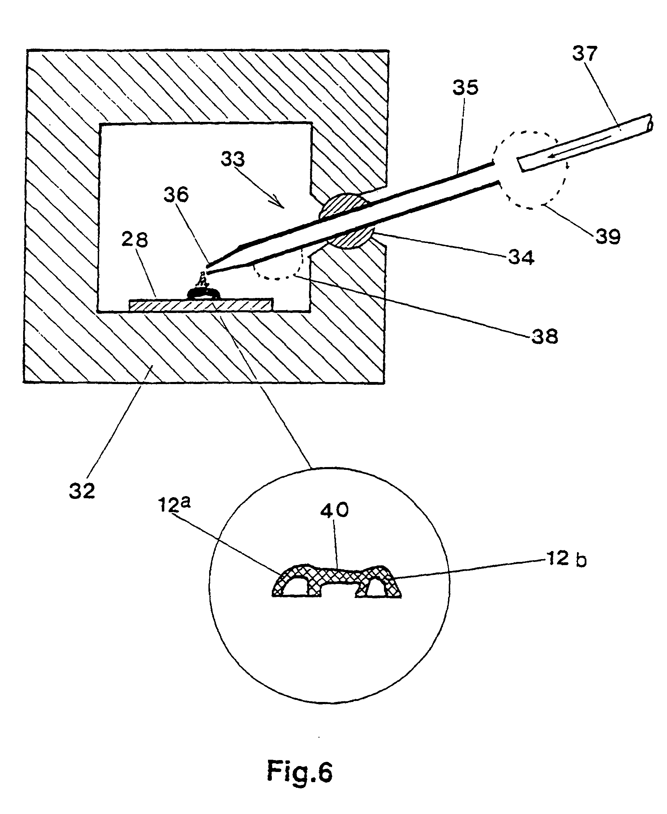

Eine weitere Beschleunigung des Verfahrens wird mit den Vorrichtungen gemäß den Figuren 5 und 6 erzielt.
Bisher wurde während der Infiltrierung das Gerüst auf eine Platinfolie aufgelegt. Platin wird von geschmolzenen Glas nicht benetzt. Da grundsätzlich mit einem Überschuß an Infiltrationspulver gearbeitet werden muß, fließt das überschüssige Glas an der Oberfläche des Gerüstes herab auf die Platinfolie und bildet dort am Gerüstrand einen Glasfuß, der in mühsamer Kleinarbeit durch Schleifen und/oder Sandstrahlen entfernt werden muß. Unter Umständen muß durch nochmaliges Erhitzen ein Teil des Überschußglases entfernt werden. Neben dem beachtlichen Arbeitsaufwand besteht noch die Gefahr, daß das Gerüst bei dieser Arbeit beschädigt wird.

Mit der Vorrichtung nach Figur 5 wird eine schnelle und sicher Entfernung des Überschußglases gewährleistet.
Figur 5 zeigt eine Unterlage 28, die im vorliegenden Fall rotationssymetrisch ausgebildet ist, was deren Herstellung erleichtert. Die Oberfläche der Unterlage 28 hat eine profilierte Oberflächenstruktur in Form einer Zick-Zack-Profilierung 29. Jede andere Profilierung ist mehr oder weniger gleich gut geeignet. Wichtig ist nur, daß die erhobenen Bereiche nicht zu groß im Vergleich zum Gerüst sind. Die Unterlage 28 weist ferner eine Nut 30 auf, die von einem aufgelegten Brückengliedgerüst 31 überbrückt wird.

Die Unterlage 28 besteht aus einem porösen Material, das durch Glas benetzt wird. In diesem Punkt wird also das Gegenteil vom Stand der Technik gefordert, der von nicht benetzbaren Platinfolien ausgeht. Als Material haben sich besonders Einbettmassen bewährt, die in der Zahntechnik üblich sind. Prinzipiell ist aber jedes Keramikmaterial durch Glas benetzbar und daher geeignet.

Während des Erhitzungsvorganges fließt das Überschußglas an der Brücke 31 herab und tropft einerseits in die Nut 30 und wird andererseits von der porösen Oberfläche aufgesogen. Gerade für Brücken mit großer Materialmasse im Mittelteil ist die Möglichkeit des Abtropfens von Vorteil, da das abgetropfte Glas keine Verbindung mit der Brücke mehr aufweist. Hierdurch minimiert sich die Menge des später zu entfernenden Glases.
Da beim Eindringen des flüssigen Glases in das poröse Material der Unterlage sich ein Mischmaterial aus Glas und Keramik bildet, weist das noch am Gerüst hängende Überschußglas schwache Festigkeitswerte im Vergleich zum reinen Glas auf. Es kann also leicht und schnell mechanisch entfernt werden.

Auch beim Abheben von der Unterlage ist keine Beschädigung des Gerüstes möglich, da die in der Figur gezeigten Zacken einfach von der Unterlage wegbrechen, ohne daß eine sonderlich starke Kraft erforderlich wäre, wenn die Unterlage aus einer Einbettmasse oder dgl. besteht.

In Figur 6 ist ein üblicher Keramikbrennofen 32 schematisch gezeigt, der in Dentallabors Verwendung findet. Durch die Wand des Ofens 32 ist eine von außen bewegliche, pipettenähnliche Auftragsvorrichtung 33 hindurchgeführt, die zweckmäßigerweise in einem Kugelgelenk 34 gelagert ist. Die Auftragsvorrichtung 33 besteht im gezeigten Fall aus einem Platinrohr 35 mit einer Spitze 36. Da das Rohr 35 innerhalb des Kugelgelenkes 34 verschieblich gelagert ist, ist die Auftragsspitze 36 innerhalb des Ofens 32 dreidimensional beweglich.
Im folgenden wird die erfindungsgemäße Herstellung eines Gerüstes für eine Brücke beschrieben.
Nach dem zuvor beschriebenen Folienverfahren werden zunächst zwei Käppchen 12a und 12b aus einem Keramikschlicker hergestellt, die mit einem Brückenzwischenglied 40 aus dem gleichen Material, z.B. Alumina, verbunden werden. Das Brückenzwischenglied kann händisch aber auch maschinell hergestellt werden, indem die Lage der beiden Käppchen 12a und 12b auf dem Arbeitmodell vermessen wird und es dann aus einem vorgesintertem Rohling computergesteuert herausgefräst wird. Das Gerüst wird anschließend gesintert. Würde das so hergestellte Brückengerüst nach dem Stand der Technik glasinfiltriert, ließe man zu diesem Zeitpunkt a) den Ofen abkühlen, b) das Brückengerüst entnehmen, c) das Infiltrierglas in Form von Pulver aufbringen und d) das bepulverte Gerüst zum Aufschmelzen des Glases erneut erhitzen.
Als Infiltrierglas verwendet man üblicherweise eine Glasfritte, die aus der EP-A-0030851 schon bekannt ist, oder ein Glas mit hohem Lanthangehalt.
Daß diese Schritte mit Energie-und Zeitverlusten verbunden sind, wurde erfindungsbegründend erkannt.
Der erste Schritt liegt daher darin, daß das Gerüst im Ofen ohne Abkühlung verbleibt, am besten auf einer Unterlage 28 gemäß Figur 5.
Während und/oder unmittelbar nach dem Sintern wird das Infiltrierglas im Ofen 32 selbst aufgeschmolzen, indem in das Rohr 35 ein Giasstab 37 eingeführt wird, der zuerst an der Spitze 36 flüssig wird. Durch entsprechendes Nachschieben des Stabes 37 ist eine ausreichende Dosiermöglichkeit gegeben, bis das Gerüst voll mit Infiltrierglas überzogen ist. Nach ca. 4 Stunden bei ca. 1100 gradC ist der Infiltriervorgang abgeschlossen. Der Vorgang kann durch ein nicht gezeigtes feuerfestes Glasfenster beobachtet werden.

Die Verwendung eines fertigen Glasstabes anstelle von Glaspulver hat den Vorteil, daß auf die aufwendige Herstellung von Glaspulver verzichtet werden kann.
Das Aufschmelzen von Pulver in einem Platinrohr ist nämlich nicht ganz problemlos, da flüssiges Glas Platin nicht benetzt und folglich kein Kapillareffekt im Rohr vorliegt. Das Glas würde daher einfach aus dem Rohr ausfließen, wenn keine gesonderten Vorkehrungen getroffen würden. Eine solche Vorkehrung wäre die angedeutete Schmelzkammer 38, in der in waagerechter Lage des Rohres das Glaspulver geschmolzen werden kann, ohne daß Glas ausfließt. In geneigter Lage des Rohres ließe sich dann mittels des angedeuteten Blasebalgs 39 das Glas dosieren.
Zu beachten ist ferner noch, daß Platin und andere geeignete Metalle eine hohe Wärmeleitfähigkeit aufweisen, die nicht gezeigte Isoliermaßnahmen erforderlich machen, damit das Rohr 35 handhabbar ist.
Nach Beendigung der Infiltrierung und den übliche mechanischen Nacharbeiten wird in einem weiteren Sintervorgang die Verblendkeramik auf das Brückengerüst aufgebracht.

Mit der vorliegenden Erfindung ist somit ein weiterer Durchbruch zur Herstellung vollkeramischer Restaurationen gelungen, die einerseits qualitativ allen Anforderungen an einen Zahnersatz gerecht werden, andererseits wegen der Effizienz des Verfahrens äußerst kostengünstig sind. Insofern erfüllt die Erfindung ein soziales Bedürfnis.

### Bezugszeichenliste

- 1: Motor
- 2: Welle
- 3: Stumpf
- 3a: Präparation des Stumpfes
- 4: Klebewachs
- 5: Auftragungswerkzeug
- 6: aufgeschrumpfte Folie
- 7: Fön
- 8: Laser
- 9: Auftragsvorrichtung für Schlicker
- 9a: Austrittsspitze
- 10: Fräskopf
- 11: Fräse
- 12: Käppchen
- 13: Folie vor dem Aufschrumpfen
- 14: Einspannungsvorrichtung
- 15: Granulataufnahmeraum
- 16: Wandung
- 17: Filter
- 18: 1.Dichtlippe
- 19: Trichter
- 20: 2.Dichtlippe
- 21: Außenrohr
- 22: Keramikmasse
- 23: Innenrohr
- 24: Auftragsspitze
- 25: Kappe
- 26: Fingerdrucköffnung
- 27: Belüftungsventil
- 28: Unterlage
- 29: Profilierung
- 30: Nut
- 31: Brückengliedgerüst
- 32: Keramikofen
- 33: Auftragsvorrichtung für Infiltrierglas
- 34: Kugelgelenk
- 35: Platinrohr
- 36: Spitze
- 37: Glasstab
- 38: Schmelzkammer
- 39: Blasebalg
- 40: Brückenzwischenglied

## Patentansprüche

1. Verfahren zur Herstellung von vollkeramischen Inlays, Kronen, Brücken, Teilbrücken-, Gerüsten für Implantate oder Superstrukturen in der Zahntechnik durch Herstellung eines Gerüstes aus Spinell, Alumina, oder Zirconia, wobei auf den Stumpf (3) eines Arbeitsmodells eine Folie aufgezogen wird, die aufgezogene Folie mit einem Schlicker versehen wird und der auf der vom Arbeitsmodell entnommenen Folie befindliche Schlicker gebrannt wird, oder wobei der Stumpf eines Arbeitsmodells mit einem Trennmittel überzogen wird, das bei Temperaturen über 45 °C flüssig ist und das bei Raumtemperatur eine lippenstiftartige Konzistenz aufweist, das aufgebrachte Trennmittel mit einem Schlicker versehen wird und nach der Trennung vom Arbeitsmodell das Material gebrannt wird, wobei in beiden Fällen während des Schlickerauftrags der Stumpf an einer sich drehenden Welle (2) fixiert ist und nach dem Brennen der resultierende Rohling, insbesondere in Form eines Käppchens, mit Glas infiltriert wird,
**dadurch gekennzeichnet, daß**
der Stumpf an der Spitze der Drehwelle (2) einer CNC-Fräsmaschine befestigt wird, daß durch Abtasten des Oberflächenprofils der Präparation dieses Profil gespeichert wird, daß über die gespeicherten Daten eine Dosiervorrichtung (9) gesteuert wird, die den Schlicker gleichmäßig auf die Folie oder das Trennmittel aufbringt, und daß anschließend das aufgebrachte Schlickermaterial mittels der gespeicherten Daten auf eine vorgegebene Stärke abgefräst wird.

2. Verfahren nach Anspruch 1, **dadurch gekennzeichnet, daß** das Abtasten des Oberflächenprofils der Präparation mittels Laserstrahlen (8) erfolgt.

3. Verfahren nach Anspruch 1, wobei die Folie (6,13) auf den stumpf (3) mittels Tiefziehen aufgezogen wird und der Stumpf (3) beim Tiefziehen der Folie in einem Granulatbett gehalten wird und durch Anlegen eines Vakuums unterhalb des Stumpfes eine erhitzte Folie auf den Stumpf aufgezogen wird und der Stumpf innerhalb eines Granulataufnahmeraums (15) von einem Trichter (19) umgeben wird, der beim Tiefziehen die Folie auf den Stumpf leitet.

4. Verfahren zur Herstellung von Kronen nach einem der Ansprüche 1 bis 3, **dadurch gekennzeichnet, daß** das hergestellte Käppchen auf dem an der Drehwelle (2) befindlichen Stumpf (3) befestigt wird,
daß auf das Käppchen eine Form aufgesteckt wird, die der gewünschten anatomischen Form der Krone entspricht,
daß diese Form abgetastet und gespeichert wird,
daß nach Entfernung dieser Form ein Keramikmaterial in der gewünschten Stärke CNC-gesteuert aufgetragen wird und
Käppchen plus Keramikmaterial zur fertigen Krone gebrannt wird.

5. Verfahren nach einem der Ansprüche 1 bis 4, **dadurch gekennzeichnet, daß** zwischen der Folie und der Präparation des Stumpfes eine Trennschicht aufgebracht wird.

6. Verfahren nach den Ansprüchen 1 bis 5, **dadurch gekennzeichnet, daß** zum Infiltrieren von gesinterten Gerüsten das Gerüst während des Erhitzens auf einer porösen, durch flüssiges Glas benetzbaren Unterlage aufliegt, die das überflüssige Glas aufsaugt.

7. Verfahren nach den Ansprüchen 1 bis 5, **dadurch gekennzeichnet, daß** zum Infiltrieren von gesinterten Gerüsten in einem Keramikofen ohne Entnahme des Gerüstes aus dem Keramikofen die Glasmasse während und/oder nach dem Sintern bevorzugt in einer im Keramikofen befindlichen Auftragsvorrichtung aufgeschmolzen wird und das flüssige Glas von der Auftragsvorrichtung auf das Gerüst aufgetragen wird.

8. Verfahren nach Anspruch 7, **dadurch gekennzeichnet, daß** die Glasmasse als Glasstab bereitgestellt wird.

9. Vorrichtung zur Durchführung des Verfahrens nach mindestens einem der Ansprüche 1 bis 8, **gekennzeichnet durch** einen Motor (1) mit regelbarer Drehzahl für eine Welle (2), die an ihrem Ende das Anbringen des Stumpfes eines Arbeitsmodels erlaubt, und einen Fön (7) mit einstellbarer Lufttemperatur.

10. Vorrichtung gemäß Anspruch 9, bestehend aus einer CNC-Fräsmaschine mit einer Laserabtastung (8), wobei in der Fräsmaschine mindestens eine ebenfalls steuerbare Dosiervorrichtung (9) für Schlicker oder Keramikmaterial integriert ist und die Dosiervorrichtung wie die Fräse gesteuert über die Oberfläche des zu beschichtenden Objektes, welches an einer drehbaren Welle (2) befestigt ist, verfahrbar ist.

11. Vorrichtung gemäß Anspruch 9 oder 10 mit einer Vorrichtung zum Auftragen eines Schlickers in dem Verfahren nach den Ansprüchen 1 bis 3, oder zum Auftragen eines Keramikmaterials nach Anspruch 4, **gekennzeichnet durch** ein Außenrohr (21), in das ein elastisches Innenrohr (23) eingelegt ist, wobei das Außenrohr (21) mit einer Fingeröffnung (26) versehen ist und das elastische Innenrohr (23) sich an einem Ende zu einer Auftragsspitze (24) verjüngt und das andere Ende zur Atmosphäre verschlossen ist.

## Claims

1. A process for the production of fully-ceramic inlays, crowns, bridges, partial bridges or frames for implants or superstructures in dentistry, comprising producing a frame from spinell, alumina or zirconia by shrink-fitting on a die (3) of a working model a film; applying a slip to the shrink-fitted film and baking the slip material after removing the slip present on the film from the working model or by covering the die of the working model with a separating agent which is liquid at temperatures above 45 °C and which, at room temperature, has a lipstick-like consistency; applying a slip to the applied separating agent and baking the material after removing from the working model whereby in both cases the die is fixed on a rotating rod (2) during application of the slip and after baking the resulting mold blank, is infiltrated with glass, **characterized in that** during the slip application, the die is fixed on a rotating rod (2) of a CNC milling machine, whereby the process further comprises sensing the surface profile of the die, storing this profile, controlling a dosing device (9) via the stored data, the dosing device applying the slip uniformly on the film or separating agent and subsequently milling off the applied slip material by means of the stored data to a desired thickness.

2. A process according to claim 1, **characterized in that** sensing of the surface profile is accomplished by laser beams (8).

3. Process according to claim 1, **characterized in that** the film (6, 13) is deep drawn onto the die (3) by holding the die (3) within a granulated bed, applying a vacuum below the die, and shrink-fitting a heated film onto the die, wherein the die, inside a granulate receiving space (15), is surrounded by a funnel (19) for guiding the film onto the die during deep drawing.

4. A process for producing a crown according to any one of claims 1 to 3, comprising fixing the blank produced on the die (3) present on the rotating rod (2); adhering to the blank a form which corresponds to the desired anatomical form of the crown; sensing the form; storing data representative of the form; after removal of this form, applying a ceramic material in the desired thickness by a CNC controlled process; and baking the blank plus ceramic material to give the finished crown.

5. A process according to any one of claims 1 to 4, wherein a separating agent layer is introduced between the film and the die.

6. A process according to any one of claims 1 to 5, wherein for the infiltration of sintered frames the frame is placed on a porous substrate wettable by liquid glass, which absorbs the excess glass, during heating.

7. A process according to any one of claims 1 to 5, **characterized in that** for the infiltration of sintered frames in a ceramic oven, the glass mass is molten during and/or after sintering in an application device present in the ceramic oven and the liquid glass is applied by the application device to the sintered frame without removal of the frame from the ceramic oven.

8. A process according to claim 6, comprising providing the glass in the form of a glass rod.

9. A device for carrying out the process according to at least one of claims 1 to 8, **characterized by** a motor (1) with regulatable speed of rotation for driving a rotating rod (2) allowing fixation of a die at its end; and a blow drier (7) with adjustable air temperature.

10. Device according to claim 9, consisting of a CNC milling machine, whereby the milling machine comprises at least one controllable dosing device (9) for slip or ceramic material and the dosing device is movable over the surface of the object to be coated which is affixed to a rotatable rod (2).

11. Device according to claim 9 or 10 comprising a device for applying slip in a process according to claims 1 to 3 or for applying ceramic material in a process according to claim 4, **characterized by** an outer tube (21) into which is introduced an elastic inner tube (23), whereby the outer tube (21) comprises a finger pressure opening (26) and the elastic inner tube (23) tapers to an application tip (24) at one end and is closed to atmosphere at the other end.

## Revendications

1. Procédé pour la fabrication de prothèses intrinsèques, de couronnes, de ponts, de ponts partiels, de structures pour des implants ou de superstructures complètement en céramiques, dans la technique dentaire, par la fabrication d'une structure en spinelle, en alumine ou en oxyde de zirconium, dans lequel, sur le moignon (3) d'un modèle de travail, on tend une feuille mince, on munit la feuille mince tendue d'un enduit au trempé et on cuit l'enduit au trempé se trouvant sur la feuille mince retirée du modèle de travail, ou bien dans lequel on recouvre le moignon d'un modèle de travail à l'aide d'un agent de démoulage qui est liquide à des températures supérieures à 45 °C et qui présente la consistance d'un rouge à lèvres à la température ambiante, on munit l'agent de démoulage appliqué d'un enduit au trempé et on cuit le matériau après sa séparation du modèle de travail, dans lequel, dans les deux cas, au cours de l'application de l'enduit au trempé on fixe le moignon à un arbre rotatif (2) et après la cuisson on introduit dans l'ébauche obtenue, en particulier sous la forme d'un petit capuchon, du verre par infiltration,
**caractérisé en ce que**
le moignon est fixé à la pointe de l'arbre rotatif (2) d'une fraise CNC, **en ce que**, par balayage du profil superficiel de la préparation, on enregistre ce profil, **en ce qu'**on commande via les données enregistrées un dispositif de dosage (9), qui applique l'enduit au trempé de manière régulière sur la feuille mince ou sur l'agent de démoulage, et **en ce qu'**on élimine ensuite par fraisage la matière appliquée de l'enduit au trempé à l'aide des données enregistrées, pour obtenir une épaisseur prédéfinie.

2. Procédé selon la revendication 1, **caractérisé en ce que** le balayage du profil superficiel de la préparation a lieu à l'aide d'un faisceau laser (8).

3. Procédé selon la revendication 1, dans lequel la feuille mince (6, 13) est tendue sur le moignon (3) par emboutissage et le moignon (3), lors de l'emboutissage de la feuille mince, est maintenu dans un lit de produit de granulation, et par application d'un vide en dessous du moignon, on tend une feuille mince chauffée sur le moignon et on fait en sorte d'entourer le moignon d'un entonnoir (19) à l'intérieur d'un espace de réception de produit de granulation (15), l'entonnoir guidant la feuille mince sur le moignon lors de l'emboutissage.

4. Procédé pour la fabrication de couronnes selon l'une quelconque des revendications 1 à 3, **caractérisé en ce qu'**on fixe le petit capuchon fabriqué sur le moignon (3) disposé sur l'arbre rotatif (2),
**en ce qu'**on enfiche un gabarit sur le petit capuchon qui correspond à la forme a natomique désirée de la couronne, **en ce qu'**on balaie et **en ce qu'**on enregistre ce gabarit,
**en ce qu'**on applique, après élimination de ce gabarit, une matière de céramique avec l'épaisseur désirée, sous la commande du CNC et
**en ce qu'**on cuit le petit capuchon plus la matière de céramique pour obtenir la couronne prête à l'emploi.

5. Procédé selon l'une quelconque des revendications 1 à 4, **caractérisé en ce qu'**on applique, entre la feuille mince et la préparation du moignon, une couche de démoulage.

6. Procédé selon les revendications 1 à 5, **caractérisé en ce que**, pour l'infiltration de structures frittées, on applique la structure, lors du chauffage, sur un substrat poreux apte à être mouillé avec du verre liquide, qui aspire le verre en excès.

7. Procédé selon les revendications 1 à 5, **caractérisé en ce que**, pour l'infiltration de structures frittées, dans un four à céramique, sans retirer la structure du four à céramique, on procède à une mise en fusion de la masse vitreuse et où a près le frittage, de préférence dans un dispositif d'application se trouvant dans le four à céramique, et on applique le verre liquide, à partir du dispositif d'application, sur la structure.

8. Procédé selon la revendication 7, **caractérisé en ce que** la masse vitreuse est procurée sous la forme d'une tige en verre.

9. Dispositif pour la mise en oeuvre du procédé selon au moins une des revendications 1 à 8, **caractérisé par** un moteur (1) à vitesse de rotation réglable pour un arbre (2) à une extrémité duquel on peut appliquer le moignon d'un modèle de travail, et par un ventilateur (7) dont la température de l'air est réglable.

10. Dispositif selon la revendication 9, constitué par une fraise CNC comprenant un balayage au laser (8), au moins un dispositif de dosage également réglable (9) pour un enduit au trempé ou pour une matière de céramique étant intégré dans la fraise, et le dispositif de dosage, au même titre que la fraise, étant à même de se déplacer de manière réglée pardessus la surface de l'objet à enduire, l'objet étant fixé à un arbre rotatif (2).

11. Dispositif selon la revendication 9 ou 10, comprenant un dispositif pour l'application d'un enduit au trempé dans le procédé selon les revendications 1 à 3, ou pour l'application d'une matière en céramique selon la revendication 4, **caractérisé par** un tube externe (21) dans lequel est inséré un tube interne élastique (23), le tube externe (21) étant muni d'une ouverture (26) pour le doigt et le tube interne élastique (23) manifestant un rétrécissement à une extrémité jusqu'à obtenir une pointe d'application (24), l'autre extrémité étant fermée en direction de l'atmosphère.
